**Europäisches Patentamt**

**European Patent Office**

**Office européen des brevets**

(11) Veröffentlichungsnummer: **0 293 982 B1**

# EUROPÄISCHE PATENTSCHRIFT

(45) Veröffentlichungstag der Patentschrift:
**13.03.91 Patentblatt 91/11**

(51) Int. Cl.$^5$: **A62D 3/00**, C04B 32/00, C04B 18/02, B09B 3/00

(21) Anmeldenummer: **88201072.1**

(22) Anmeldetag: **30.05.88**

(54) **Verfahren zur Aufarbeitung von kontaminierten Mineralstoffen.**

(30) Priorität: **04.06.87 DE 3718669**

(43) Veröffentlichungstag der Anmeldung:
**07.12.88 Patentblatt 88/49**

(45) Bekanntmachung des Hinweises auf die Patenterteilung:
**13.03.91 Patentblatt 91/11**

(84) Benannte Vertragsstaaten:
**BE DE GB IT NL SE**

(56) Entgegenhaltungen:
**EP-A- 0 033 133**
**DE-A- 2 164 886**
**DE-A- 3 206 984**
**DE-C- 359 043**

(56) Entgegenhaltungen:
**DE-C- 460 815**
**FR-A- 2 104 443**
**US-A- 4 398 998**
**CHEMICAL ABSTRACTS, Band 84, Nr. 18, Mai 1976, Seite 281, Zusammenfassung Nr. 126051v, Columbus, Ohio, US; & JP-A-75 122 508 (KOBE STEEL LTD) 26-09-1975**
**CHEMICAL ABSTRACTS, Band 93, Nr. 2, Juli 1980, Seite 272, Zusammenfassung Nr. 12419b, Columbus, Ohio, US; & JP-A-80 02 781 (NIHON JIRYOKU SENKO, INC.) 10-01-1980**

(73) Patentinhaber: **METALLGESELLSCHAFT AG**
**Reuterweg 14 Postfach 3724**
**W-6000 Frankfurt/M.1 (DE)**

(72) Erfinder: **Serbent, Harry Dr.**
**Gustav-Hoch-Strasse 5d**
**W-6450 Hanau am Main 1 (DE)**

EP 0 293 982 B1

## Beschreibung

Die Erfindung betrifft ein Verfahren zur Aufarbeitung von kontaminierten Mineralstoffen durch thermische Behandlung im Drehrohrofen.

Die Entgiftung kontaminierter Mineralgemenge und deren Überführung in harmlose, ohne Probleme zu deponierende bzw. für andere Zwecke verwendbare Materialien ist eine wichtige Aufgabenstellung für den zukünftigen Umweltschutz.

Unter kontaminierten Mineralgemengen sind dabei Stoffe zu verstehen, die im wesentlichen Kieselsäure, Tonerde, Kalk und Magnesia enthalten und aufgrund von Verunreinigungen weder problemlos deponiert noch für andere Zwecke verwandt werden können, sondern normalerweise mit erheblichen Kosten zu Sondermülldeponien transportiert und dort abgelagert werden müssen. Dabei sind aufwendige Maßnahmen erforderlich, um z.B. die Kontamination von Grundwasser zu vermeiden.

Als Beispiele, die die außerordentliche Vielfalt dieser Stoffe widerspiegeln, sollen nur wenige genannt werden :

Schlämme aus Gasfabriken, Kokereien, Kläranlagen und der Metallbearbeitung sowie aus verschiedenen Bereichen der organischen, der anorganischen Chemie und der Metallurgie, Hafenschlick, kontaminierte Bleicherde, Gießereirückstände, mit Kohlenwasserstoffen, Ölen, Fetten, Farbstoffen, Lösungsmitteln, Chemikalien und NE-Metallverbindungen etc. verunreinigte Böden industrieller Standorte, sowie Material aus Altdeponien und Schadstoffkonzentrate aus Bodenwaschanlagen.

Die Verunreinigungen in diesen Stoffen können eingeteilt werden in :
organische Bestandteile :
Kohlenwasserstoffe aller Art, ihre Derivate, insbesondere ihre Halogenverbindungen, Fette, Öle, sonstige brennbare Bestandteile etc. und
anorganische Bestandteile :
Schwermetalle, wie Cr, Ni, Cu, Zn, Pb, Cd, Hg etc. und deren Verbindungen, Ammoniak, Cyanverbindungen, aber auch As und Sb.

Nasse Verfahren zur Abtrennung solcher Stoffe durch z.B. Laugung und Extraktion wirken stets nur selektiv und erfordern eine komplexe Abwasserreinigung.

Als in vielen Fällen günstigere Alternative werden thermische Behandlungsverfahren vorgeschlagen, bei denen z.B. im Drehrohrofen organische Bestandteile ausgebrannt bzw. zersetzt und die Endprodukte in einem Abgas abgeführt werden, das dann entsprechend behandelt werden muß. Von den Schwermetallen können dabei auch gewisse Anteile wie z.B. Hg und unter bestimmten Bedingungen auch Zn, Pb und Cd verflüchtigt werden und sind dann aus dem Abgas abzutrennen.

Aus der GB-A- 13 36 712 ist es bekannt, $SiO_2$-haltige Abfallstoffe mit einem $SiO_2$-Gehalt von mindestens 30%, wie pulverförmige Hochofenschlacke, Kupolofenschlacke, oder Baggerschlämme, mit einer Korngröße unter 1 mm, vorzugsweise unter 0,256 mm, bei Temperaturen von über 1000°C aber unter dem Schmelzpunkt von mindestens der Mehrzahl der pulverförmigen Abfallstoffe zu sintern. Diese Arbeitsweise beseitigt jedoch die Problematik der im Rückstand verbleibenden Schwermetalle nicht. Ihre Verbindungen werden dabei z.T. erst aufgeschlossen und einem Herauslaugen durch Wasser und Huminsäuren zugänglich gemacht.

Die EP-A-0 170 212 beschreibt ein Verfahren zur Herstellung von Agglomeraten aus Abwässern, Stäuben oder Schlämmen aus industriellen oder kommunalen Reinigungsanlagen, wobei die Agglomerate auch nach einer Zerkleinerung vollständig inert gegenüber Auslaugung sein sollen. Dazu müssen diese Stoffe mit 30 bis 99% Ton in sehr aufwendigen Mischverfahren homogenisiert werden, anschließend granuliert und dann thermisch in einem Drehrohrofen bei Temperaturen von 700 bis 1300°C behandelt werden. Zur Erzeugung von geschäumten Agglomeraten enthalten die Granalien 99 bis 80% Ton und werden bei Temperaturen zwischen 1000 und 1300°C thermisch behandelt. Zur Erzeugung von nicht geschäumten Agglomeraten enthalten die Granalien 30 bis 80% Ton und werden bei Temperaturen zwischen 700 und 1100°C behandelt. Bei diesem Verfahren wird also das Volumen der Abfallstoffe beträchtlich vergrößert und dieses große Volumen muß der thermischen Behandlung unterworfen werden.

Der Erfindung liegt die Aufgabe zugrunde, die Nachteile der bekannten Verfahren zu vermeiden und die kontaminierten Mineralstoffe in möglichst einfacher Weise in eine Form zu überführen, die gefahrlos deponiert oder für andere Zwecke benutzt werden kann.

Die Lösung dieser Aufgabe erfolgt erfindungsgemäß dadurch, daß die thermische Behandlung bei einer Temperatur erfolgt, bei der die Beschickung des Drehrohrofens in eine teigige bis flüssige Schlackenphase übergeführt wird, wobei die Zusammensetzung der Beschickung so eingestellt wird, daß eine Schlackenphase erzeugt wird, deren die Grundmasse ausmachenden Hauptbestandteile im Bereich von 60 bis 72% $SiO_2$, 10 bis 30% $Al_2O_3$ und 5 bis 25% CaO + MgO liegen, wobei die Summe von% $SiO_2$ + % $Al_2O_3$ + % CaO + % MgO = 100% ist, und die Hauptbestandteile $SiO_2$, $Al_2O_3$, CaO und MgO zusammen mindestens 60% des

2

trockenen und glühverlustfreien, dem Drehrohrofen aufgegebenen Mineralstoffes betragen, die ausgetragene Schlackenphase abgekühlt wird und das Abgas des Drehrohrofens einer Reinigung unterzogen wird.

Der Drehrohrofen wird im Gegenstrom zwischen Beschickung und Ofenatmosphäre betrieben. Die für die thermische Behandlung erforderliche Energie kann von Problemstoffen eingebracht werden, die brennbare Bestandteile enthalten und deren Deponie ebenfalls erheblich Kosten und Schwierigkeiten verursacht. Solche Stoffe sind z.B. Waschberge, Kohlenschlämme, Räumaschen, öl- und fetthaltige Rückstände, Altöl, Kunststoffschnitzel, Altgummischnitzel, Shreddermüll, etc. Verbleibende Energiedefizite können durch Kohlen jeder Art, von Anthrazit bis Braunkohle, vor allem auch mit höheren Gehalten an Asche und flüchtigen Bestandteilen, ausgeglichen werden. Beim Zusatz solcher Stoffe oder Kohlen ist deren Zusammensetzung im Hinblick auf das erforderliche Verhältnis $SiO_2/Al_2O_3/CaO + MgO$ in der Beschickung zu berücksichtigen. Das restliche Energiedefizit wird durch einen am Austragsende des Drehrohrofens angeordneten Zentralbrenner eingebracht, der je nach Bedarf mit mehr oder weniger Brennstoff betrieben wird und auch nur als Luftzuführung benutzt werden kann. Der Zentralbrenner kann mit Kohlenstaub, Öl oder Gas betrieben werden. Die für den Prozeß erforderliche Luftmenge, die nicht durch den Zentralbrenner eingebracht wird, wird in das Austragsende des Drehrohrofens eingesaugt. Die Ofenatmosphäre im freien Ofenraum ist oxidierend. In der Beschickung können reduzierende Bedingungen vorliegen, wenn die Beschickung kohlenstoffhaltige Bestandteile enthält, bei deren Verbrennung CO entsteht. Eine stark reduzierende Atmosphäre in der Beschickung ist jedoch nicht erforderlich. Der Gehalt der Beschickung an brennbaren Bestandteilen wird so eingestellt, daß er möglichst vollständig im Ofen verbrannt wird und kein Überschuß in der Schlackenphase vorliegt. Die geforderte Zusammensetzung der Grundmasse der Schlackenphase kann bei manchen Stoffen, eventuell nach der Zugabe von Kohle oder Stoffen mit brennbaren Bestandteilen, bereits vorliegen. Sie läßt sich sonst leicht durch Vermischen verschiedener, unterschiedlich zusammengesetzter Mineralstoffe einstellen. Die Mischung kann unter Befeuchtung z.B. in einer Trommel erfolgen, um einen höheren Staubanfall beim Eintragen in den Drehrohrofen zu vermeiden. Eine Pelletierung oder Sinterung der Mischung vor dem Eintrag ist nicht erforderlich. Die kontaminierten Mineralstoffe können schlammförmig, pastös oder fest eingesetzt werden. Die prozentualen Anteile der Hauptbestandteile der Grundmasse sind als Gew.-% angegeben. Bei der Berechnung des erfindungsgemäßen Anteiles der Grundmasse der Schlackenphase an der gesamten Schlackenphase wird vorher die Nässe und der Glühverlust (Hydratwasser, Kohlensäure und als Brennstoff wirkende Anteile) abgezogen. Unter "Brennstoff" sind dabei von den Mineralstoffen eingebrachte Anteile an Kohlenstoff, Kohlenwasserstoffen, Öle, Fette, Teere sowie Kohlen und deren flüchtige Bestandteile etc. zu verstehen. Die Differenz der gesamten Schlackenphase zur Grundmasse der Schlackenphase von maximal 40% kann von Bestandteilen wie z.B. Eisenoxiden, Alkalien, Titandioxid, Sulfaten etc. gebildet werden. Die im Schlußteil des Drehrohrofens zur Erzeugung der teigigen bis flüssigen Schlackenphase erforderliche Temperatur ist abhängig von der Zusammensetzung innerhalb der erfindungsgemäßen Bereiche. Außerdem wird das Schmelzverhalten zusätzlich auch von den weiteren Bestandteilen der Schlacke wie FeO, Alkalien, $TiO_2$ etc. beeinflußt. Die erforderliche Temperatur kann empirisch ermittelt werden. Die aus dem Drehrohrofen ausgetragene Schlacke wird gekühlt und kann dann der Weiterverwendung oder Deponie zugeführt werden. Die in der Beschickung enthaltenen brennbaren und verflüchtigungsfähigen Bestandteile werden hauptsächlich vor der Schlackenbildungszone ausgetrieben und mit dem Abgas aus dem Ofen ausgetragen. Die Reinigung des Abgases erfolgt nach den bekannten Methoden, die sich nach dem Gehalt und der Art der Verunreinigungen richten.

Eine vorzugsweise Ausgestaltung besteht darin, daß die Hauptbestandteile $SiO_2$, $Al_2O_3$, CaO und MgO zusammen mindestens 70% des trockenen und glühverlustfreien, dem Drehrohrofen aufgegebenen Mineralstoffes betragen. Ein Anteil der Grundmasse von mindestens 70% an der gesamten Schlackenphase ergibt einen besonders guten Einschluß der noch verbleibenden Schadstoffe in der glasigen Schlacke.

Eine vorzugsweise Ausgestaltung besteht darin, daß die Beschickung im Drehrohrofen auf eine Temperatur von 1150 bis 1400°C aufgeheizt wird. In diesem Temperaturbereich wird eine gute glasige Schlackenphase erzielt, die mit Sicherheit einen Einschluß der Schadstoffe erzielt.

Eine vorzugsweise Ausgestaltung besteht darin, daß die dem Drehrohrofen aufzugebenden Stoffe in einer Korngröße von maximal 10 mm, vorzugsweise maximal 5 mm vorliegen. Diese Korngröße ergibt besonders gute Betriebsbedingungen.

Eine vorzugsweise Ausgestaltung besteht darin, daß als Energieträger C-haltige Stoffe eingesetzt werden, die ebenfalls Deponieprobleme darstellen. Auf diese Weise können mehrere Abfallstoffe eingesetzt werden und gleichzeitig die Kosten für die Energieerzeugung gesenkt werden.

Eine vorzugsweise Ausgestaltung besteht darin, daß die heiße Schlacke in einer Kühltrommel mit Wasser besprüht oder in ein Wasserbad eingetragen wird und ein schlackensandähnliches Produkt erzeugt wird. Dadurch wird in einfacher Weise die Kühlung und gleichzeitige Zerkleinerung der Schlacke erzielt.

Eine vorzugsweise Ausgestaltung besteht darin, daß die heiße Schlacke einem Schlackenband zugeführt wird und Schlackensteine erzeugt werden. Dadurch wird in einfacher Weise eine Kühlung der Schlacke unter gleichzeitiger Formgebung erzielt.

Eine vorzugsweise Ausgestaltung besteht darin, daß ein kontrollierter Ausbrand des Drehrohrofenabgases in einer dem Drehrohrofen abgasseitig nachgeschalteten Nachbrennkammer erfolgt. Das den Drehrohrofen verlassende Abgas hat eine Temperatur von etwa 700-900°C und enthält in den meisten Fällen noch gasförmige, dampfförmige oder feinkörnige feste brennbare Bestandteile. Diese Bestandteile werden in der Nachbrennkammer durch Steigerung der Abgastemperatur bis auf maximal etwa 1200°C verbrannt. Wenn das Abgas nicht zündfähig ist, kann eine Zuheizung erfolgen. Es ist jedoch auch möglich, die Zündfähigkeit des Abgases durch Zugabe von entsprechenden Stoffen, wie z.B. Braunkohle, in den Drehrohrofen zu bewirken, weil dann die bereits bei relativ niedrigen Temperaturen in der Beschickung ausgetriebenen flüchtigen, brennbaren Bestandteile zum Teil unverbraucht mit dem Abgas den Drehrohrofen verlassen. Durch diese Nachverbrennung wird der Schadstoffgehalt der Abgase weitgehendst verringert.

Eine vorzugsweise Ausgestaltung besteht darin, daß die Nachbrennkammer berohrt ausgestaltet wird und Dampf erzeugt wird. Dadurch wird der Energiegehalt des Abgases weitgehend genutzt.

Eine vorzugsweise Ausgestaltung besteht darin, daß der aus dem Drehrohrofenabgas abgeschiedene Staub solange in den Ofen rezirkuliert wird, bis einzelne Bestandteile soweit angereichert sind, daß sie zwecks Gewinnung von Wertstoffen ausgeschleust werden können. Diese Arbeitsweise wird insbesondere dann angewendet, wenn die Mineralstoffe z.B. NE-Metalle wie Pb und Zn enthalten, die zum Teil verflüchtigt werden. Dadurch kann eine Rückgewinnung dieser Stoffe erfolgen.

Die Erfindung wird anhand eines Beispieles näher erläutert.

Eine Mischung kontaminierter Stoffe wurde in einer Menge von 600 kg/h einem gegenstrombeheizten Drehrohrofen von 12 m Länge und 0,8 m Mauerwerksdurchmesser aufgegeben, der bei einer Neigung von 2% mit einer Drehzahl von 0,6 Upm betrieben wurde. Die Beheizung erfolgte mit Öl mittels eines Zentralbrenners vom Austragsende.

Die dem Drehrohrofen aufgegebene Materialmischung enthielt im Mittel 15% Nässe und bezogen auf Trockensubstanz:

$$48,1 \text{ \% } SiO_2$$
$$11,6 \text{ \% } Al_2O_3$$
$$11,8 \text{ \% } CaO$$
$$2,0 \text{ \% } MgO$$
$$8,0 \text{ \% } C$$
$$3,2 \text{ \% Org. Bestandteile}$$
$$1,9 \text{ \% } Zn + Pb$$
$$0,8 \text{ \% } Cu + Ni$$
$$0,3 \text{ \% } Cr$$
$$1,5 \text{ \% } Cl$$
$$0,5 \text{ \% } F$$
$$2,0 \text{ \% } S$$

Die die Grundmasse der Schlackenphase ausmachenden Hauptbestandteile $SiO_2$, $Al_2O_3$, $CaO$ und $MgO$ betrugen 73,5% der Trockensubstanz. Die Grundmasse enthielt 65,5% $SiO_2$, 15,8% $Al_2O_3$, 16% $CaO$ und 2,7% $MgO$.

Bei einer maximalen Materialtemperatur von 1320°C wurde das Material aus dem Drehrohrofen in Form einer Schlacke ausgetragen, die in ein Wasserbad geleitet und aus diesem mittels eines Kratzbandes entnommen wurde. Die Schlacke enthielt die nicht verflüchtigten Schwermetalle praktisch vollständig eingebunden und mineralisch eingeschlossen. Sie liegen damit in nicht auslaugbarer Form vor.

Das Abgas wurde in einer dem Ofen abgabeseitig angeschlossenen Nachbrennkammer bei etwa 1150°C nachverbrannt, entstaubt und nach konventionellen Methoden gereinigt. Der Staub enthielt 10,5% Zn + Pb. Er wurde der Ofenaufgabemischung zugesetzt und nach mehrfacher Rezirkulation mit über 25% Zn + Pb aus dem Kreislauf entnommen und an eine Zinkhütte abgegeben.

Die Vorteile der Erfindung bestehen darin, daß die in den Mineralstoffen enthaltenen Schadstoffe zum Teil durch Verbrennung in unschädliche Stoffe ungewandelt werden und die verbleibenden Schadstoffe in der gebildeten Schlackenphase derart eingeschlossen und immobilisiert werden, daß die Schlacke entweder problemlos deponiert oder für verschiedene Zwecke, wie Geländeauffüllung, Straßen- und Dammbau, Bergeversatz etc., verwendet werden kann.

## Ansprüche

1. Verfahren zur Aufarbeitung von kontaminierten Mineralstoffen durch thermische Behandlung im Drehrohrofen, dadurch gekennzeichnet, daß die thermische Behandlung bei einer Temperatur erfolgt, bei der die Beschickung des Drehrohrofens in eine teigige bis flüssige Schlackenphase übergeführt wird, wobei die Zusammensetzung der Beschickung so eingestellt wird, daß eine Schlackenphase erzeugt wird, deren die Grundmasse ausmachenden Hauptbestandteile im Bereich von 60 bis 72% $SiO_2$, 10 bis 30% $Al_2O_3$ und 5 bis 25% CaO + MgO liegen, wobei die Summe von% $SiO_2$ + % $Al_2O_3$ + % CaO + % MgO = 100% ist, und die Hauptbestandteile $SiO_2$, $Al_2O_3$, CaO und MgO zusammen mindestens 60% des trockenen und glühverlustfreien, dem Drehrohrofen aufgegebenen Mineralstoffes betragen, die ausgetragene Schlackenphase abgekühlt wird und das Abgas des Drehrohrofens einer Reinigung unterzogen wird.

2. Verfahren nach Anspruch 1, dadurch gekennzeichnet, daß die Hauptbestandteile $SiO_2$, $Al_2O_3$, CaO und MgO zusammen mindestens 70% des trockenen und glühverlustfreien, dem Drehrohrofen aufgegebenen Mineralstoffes betragen.

3. Verfahren nach Anspruch 1 oder Anspruch 2, dadurch gekennzeichnet, daß die Beschickung im Drehrohrofen auf eine Temperatur von 1150 bis 1400°C aufgeheizt wird.

4. Verfahren nach einem der Ansprüche 1 bis 3, dadurch gekennzeichnet, daß die dem Drehrohrofen aufzugebenden Stoffe in einer Korngröße von maximal 10 mm, vorzugsweise maximal 5 mm vorliegen.

5. Verfahren nach einem der Ansprüche 1 bis 4, dadurch gekennzeichnet, daß als Energieträger C-haltige Stoffe eingesetzt werden, die ebenfalls Deponieprobleme darstellen.

6. Verfahren nach einem der Ansprüche 1 bis 5, dadurch gekennzeichnet, daß die heiße Schlacke in einer Kühltrommel mit Wasser besprüht oder in ein Wasserbad eingetragen wird und ein schlackensandähnliches Produkt erzeugt wird.

7. Verfahren nach einem der Ansprüche 1 bis 5, dadurch gekennzeichnet, daß die heiße Schlacke einem Schlackenband zugeführt wird und Schlackensteine erzeugt werden.

8. Verfahren nach einem der Ansprüche 1 bis 7, dadurch gekennzeichnet, daß ein kontrollierter Ausbrand des Drehrohrofenabgases in einer dem Drehrohrofen abgasseitig nachgeschalteten Nachbrennkammer erfolgt.

9. Verfahren nach einem der Ansprüche 1 bis 8, dadurch gekennzeichnet, daß die Nachbrennkammer berohrt ausgestaltet wird und Dampf erzeugt wird.

10. Verfahren nach einem der Ansprüche 1 bis 9, dadurch gekennzeichnet, daß der aus dem Drehrohrofenabgas abgeschiedene Staub solange in den Ofen rezirkuliert wird, bis einzelne Bestandteile soweit angereichert sind, daß sie zwecks Gewinnung von Wertstoffen ausgeschleust werden können.

## Claims

1. Method for processing contaminated mineral substances by heat treatment in a rotary kiln, characterised in that the heat treatment is carried out at a temperature at which the charge of the rotary kiln is converted into a pasty to liquid slag phase, with the composition of the charge being set so that a slag phase is produced in which the main constituents constituting the matrix are in the range of 60 to 72% $SiO_2$, 10 to 30% $Al_2O_3$ and 5 to 25% CaO + MgO, with the total of % $SiO_2$+ % $Al_2O_3$ + % CaO + % MgO = 100%, and the main constituents $SiO_2$, $Al_2O_3$, CaO and MgO together amounting to at least 60% of the dry, mineral substance free of loss on ignition which is fed to the rotary kiln, the discharged slag phase is cooled and the exhaust gas from the rotary kiln is subjected to purification.

2. Method according to Claim 1, characterised in that the main constituents $SiO_2$, $Al_2O_3$, CaO and MgO together amount to at least 70% of the dry mineral substance free of loss on ignition which is fed to the rotary kiln.

3. Method according to Claim 1 or Claim 2, characterised in that the charge is heated to a temperature of 1150 to 1400°C in the rotary kiln.

4. Method according to one of Claims 1 to 3, characterised in that the substances to be charged into the rotary kiln have a grain size of at most 10 mm, preferably at most 5 mm.

5. Method according to one of Claims 1 to 4, characterised in that carbon-containing substances which likewise represent disposal problems are used as energy sources.

6. Method according to one of Claims 1 to 5, characterised in that the hot slag is sprayed with water in a cooling drum or is introduced into a water bath and a slag sand-like product is produced.

7. Method according to one of Claims 1 to 5, characterised in that the hot slag is sent to a slag conveyor and slag bricks are produced.

8. Method according to one of Claims 1 to 7, characterised in that controlled combustion of the rotary kiln exhaust gas takes place in an after-burning chamber succeeding the rotary kiln on the exhaust gas side.

9. Method according to one of Claims 1 to 8, characterised in that the after-burning chamber is provided with tubes and steam is generated.

10. Method according to one of Claims 1 to 9, characterised in that the dust collected from the rotary kiln exhaust gas is recycled into the kiln until individual constituents are enriched to such an extent that they can be discharged in order to obtain valuable substances.


## Revendications

1. Procédé de traitement de substances minérales contaminées par traitement thermique dans un four rotatif, caractérisé en ce que le traitement thermique a lieu à une température à laquelle la charge du four rotatif est transformée en une phase de scories pâteuse à liquide, la composition de la charge étant réglée de telle manière qu'on obtient une phase de scories dont les composants principaux formant la masse de base sont compris dans une plage de 60 à 72% de $SiO_2$, de 10 à 30% de $Al_2O_3$ et de 5 à 25% de CaO + MgO, la somme des % de $SiO_2$ + % de $Al_2O_3$ + % de CaO + % de MgO = 100% et les composants principaux $SiO_2$, $Al_2O_3$, CaO et MgO représentant ensemble au moins 60% de la substance minérale sèche, après perte au feu, introduite dans le four rotatif, en ce que la phase de scories évacuée est refroidie et en ce que le gaz résiduel du four rotatif est soumis à une épuration.

2. Procédé selon la revendication 1, caractérisé en ce que les composants principaux $SiO_2$, $Al_2O_3$, CaO et MgO représentent ensemble au moins 70% des substances minérales sèches, après perte au feu, introduites dans le four rotatif.

3. Procédé selon la revendication 1 ou la revendication 2, caractérisé en ce que la charge dans le four rotatif est chauffée à une température comprise entre 1150 et 1400°C.

4. Procédé selon l'une des revendications 1 à 3, caractérisé en ce que les substances introduites dans le four rotatif possèdent une granulométrie d'au maximum 10 mm, de préférence d'au maximum 5 mm.

5. Procédé selon l'une des revendications 1 à 4, caractérisé en ce qu'on utilise comme substances énergétiques des substances contenant du carbone qui présentent également des problèmes de stockage.

6. Procédé selon l'une des revendications 1 à 5, caractérisé en ce que les scories chaudes sont aspergées d'eau dans un tambour de refroidissement ou sont introduites dans un bain d'eau et qu'on obtient un produit semblable au laitier.

7. Procédé selon l'une des revendications 1 à 5, caractérisé en ce que les scories chaudes sont alimentées en une coulée de scories et qu'on obtient des briques de scories.

8. Procédé selon l'une des revendications 1 à 7, caractérisé en ce que le gaz résiduel du four rotatif est brûlé de manière contrôlée dans une chambre de postcombustion disposée après le four rotatif dans le courant du gaz résiduel.

9. Procédé selon l'une des revendications 1 à 8, caractérisé en ce que la chambre de postcombustion a la forme d'un tuyau et qu'on obtient de la vapeur.

10. Procédé selon l'une des revendications 1 à 9, caractérisé en ce que la poussière séparée du gaz résiduel provenant du four rotatif est recyclée dans le four jusqu'à ce que des composants particuliers soient enrichis de telle manière qu'on puisse les extraire pour l'obtention de substances de valeur.